# EUROPÄISCHE PATENTSCHRIFT

(11) **EP 0 874 684 B1**
(45) Veröffentlichungstag und Bekanntmachung des Hinweises auf die Patenterteilung: **24.05.2000**
(21) Anmeldenummer: 96942360.7
(22) Anmeldetag: 05.12.1996
(51) Int. Cl.: B01J 2/00, B01J 2/06, C11D 11/00

(54) **VERFAHREN ZUR HERSTELLUNG EINES GRANULAREN ADDITIVS**
PROCESS FOR PRODUCING A GRANULAR ADDITIVE
PROCEDE DE PRODUCTION D'UN ADDITIF GRANULE

(30) Priorität: 14.12.1995 DE 19546735
(43) Veröffentlichungstag der Anmeldung: 04.11.1998
(73) Patentinhaber: Henkel Kommanditgesellschaft auf Aktien, 40589 Düsseldorf-Holthausen (DE)
(72) Erfinder: ARTIGA GONZALEZ, Rene-Andres, D-40589 Düsseldorf (DE); BAUER, Volker, D-39307 GENTHIN (DE); BÖCKER, Monika, D-42799 Leichlingen (DE); SCHAMBIL, Fred, D-40789 Monheim (DE); JEBENS, Heike, D-40589 Düsseldorf (DE)
(86) Internationale Anmeldenummer: EP9605444
(87) Internationale Veröffentlichungsnummer: WO9721487

(56) Entgegenhaltungen:
- EP-A- 0 637 628
- DE-A- 2 327 956
- DE-A- 4 304 475
- US-A- 3 258 311

## Beschreibung

Die Erfindung betrifft ein Verfahren zur Herstellung von granularen Additiven für die Verwendung in Wasch- oder Reinigungsmitteln.

Eine herkömmliche Art der Herstellung von tensidhaltigen granularen Additiven ist die Sprühtrocknung. Sie besitzt einmal den Nachteil, daß lediglich begrenzte Mengen an organischen Komponenten aus Sicherheitsgründen in dem sprühzutrocknenden Slurry eingesetzt werden können und somit auch Granulate mit nur begrenzten Mengen an Tensiden erhalten werden können. Der maximale Gehalt an Tensiden in einem sprühgetrockneten Granulat ist dabei in hohem Maße auch von der Art des Tensids abhängig. So lassen sicherheitstechnische Untersuchungen an sprühgetrockneten Granulaten auf Basis von Fettalkylsulfaten oder Talgalkylsulfaten mit 20 Gew.-% oder mehr an Aktivsubstanz erkennen, daß die Zerstäubungstrocknung derartiger Formulierungen nur sehr eingeschränkt möglich ist und beispielsweise Turmeintrittstemperaturen unterhalb 200 °C erfordert. Außerdem ist die Sprühtrocknung von Formulierungen mit hohem Wasser- und relativ geringem Aktivsubstanzgehalt energetisch sehr aufwendig und daher sehr kostenträchtig.

Die europäische Patentanmeldung EP-A-0 402 111 beschreibt ein Verfahren zur Herstellung von tensidhaltigen Granulaten, welches ohne eine nachgeschaltete Trocknung auskommt, wobei zunächst eine breiförmige Masse, welche im wesentlichen 20 bis 90 Gew.-% Tenside, 5 bis 40 Gew.-% Wasser und 0 bis 25 Gew.-% eines Entagglomerierungsmittels enthält, hergestellt und anschließend mit den Mengen eines Ent-agglomerierungsmittels in einem Hochgeschwindigkeitsmischer intensiv vermischt wird, bis ein rieselfähiges Granulat entsteht. Je höher der Wassergehalt des Breies war, desto mehr Entagglomerierungsmittel muß in der Regel bis zur Granulatbildung hinzugegeben werden und desto niedriger wird dann der Tensidgehalt. Überraschenderweise ist der Wassergehalt in den angegebenen Beispielen insgesamt in den fertigen Produkten gleich hoch oder sogar höher als in der breiförmigen Masse. In jedem Fall weisen die Granulate substantielle Mengen an freiem, das heißt nicht chemisch gebundenem Wasser auf.

Die internationale Patentanmeldung WO-A-92/01036 beschreibt ein Verfahren, bei dem wäßrige Tensidpasten mit einem Feststoff granuliert, anschließend getrocknet, rückgeführt und erneut mit wäßriger Tensidpaste granuliert werden. Auf diese Weise werden Granulate mit Tensidgehalten von wenigstens 20 Gew.-% erhalten. Nach der letzten Granulierstufe ist prinzipiell keine Trocknung erforderlich. Jedoch ist die Lagerbeständigkeit von nicht getrockneten Granulaten nicht immer gegeben, so daß eine Trocknung bevorzugt ist. Die Trocknung kann so weit fortgeführt werden, daß eventuell nicht nur das nicht gebundene Wasser, sondern auch Anteile des gebundenen Wassers aus dem Granulat entfernt werden. Die Wirbelschichttrocknung ist dabei eine bevorzugte Trocknungsart, da hier eine rasche Antrocknung der Außenfläche des Granulats unter gleichzeitiger intensiver Bewegung und Durchmischung des Granulats eintritt, so daß auf diesem Wege einem unerwünschten Zusammenbacken der noch feuchten Granulate entgegengewirkt wird. Dieses Verfahren ermöglicht es zwar, rieselfähige und lagerbeständige Granulate mit hohen Tensidgehalten von beispielsweise 70 Gew.-% herzustellen, ist aber relativ aufwendig und aufgrund der verschiedenen Trocknungsstufen auch relativ kostenträchtig.

Der Wassergehalt eines Granulats stellt jedoch den wesentlichen Faktor in punkto Rieselfähigkeit und Lagerstabilität des Granulats dar. Prinzipiell kann jedes Granulat eine bestimmte Menge an Wasser binden, ohne daß das Rieselverhalten und die Lagerstabilität negativ beeinflußt werden. Unterhalb dieser Menge sind die Granulate hygroskopisch und müssen vor Feuchtigkeitszufluß - beispielsweise durch eine hydrophobe Hülle - geschützt werden, um ein Verkleben oder Zusammenbacken während der Lagerung zu verhindern und die Rieselfähigkeit aufrechtzuerhalten. Oberhalb dieser Menge kommt es von vornherein zu Verklebungen, so daß die Granulate - beispielsweise durch Wärmezufuhr oder durch Behandlung mit einem Feststoff, der Feuchtigkeit aufnehmen kann - getrocknet werden müssen.

Die DE-A 2 327 956 beschreibt die Herstellung eines granularen Waschmitteladditivs, wobei die festen und flüssigen nichtwässrigen Komponenten vermischt werden, Wasser in geringem Überschuß, bezogen auf die Wasserbindefähigkeit des Gemisches, zugegeben, das feuchte Gemisch granuliert und das erhaltene Rohgranulat mikrowellengetrocknet wird.

Granulare Additive mit hohen Mengen an Buildersubstanzen sind bereits aus der internationalen Patentanmeldung WO-A-92/13937 bekannt. Es handelt sich hierbei um Zusammensetzungen, die 40 bis 75 Gew.-% an Natriumsalzen mindestens einer homopolymeren bzw. copolymeren (Meth-)Acrylsäure und 1 bis 35 Gew.-% an synthetischem und gebundenes Wasser enthaltendem Zeolith aufweisen und durch den kostspieligen Sprühtrocknungsprozeß hergestellt werden. Die Additive können bis zu 3 Gew.-% an Tensiden, beispielsweise Aniontenside wie Seife, aromatische Sulfonate oder Alkylsulfate oder nichtionische Tenside wie Alkylpolyglykoside enthalten. Insbesondere der Seifengehalt ist auf relativ niedrige Mengen beschränkt, da ansonsten die Viskosität des sprühzutrocknenden Slurries zu stark ansteigen würde.

Demgegenüber offenbart die deutsche Patentanmeldung DE-A-42 13 036 granulare Additive, welche 20 bis 40 Gew.-% an Natriumsalzen mindestens einer homopolymeren bzw. copolymeren (Meth-)Acrylsäure und 8 bis 25 Gew.-% Natriumsilikat sowie 15 bis 50 Gew.-% Natriumcarbonat und/oder Natriumsulfat (wasserfrei berechnet) sowie 5 bis 15 Gew.-% Wasser enthalten und ebenfalls mittels Sprühtrocknung hergestellt werden.

Schließlich sind aus der deutschen Patentanmeldung DE-A- 39 37 469 granulare Additive bekannt, welche 35 bis 60 Gew.-% an Natriumsalzen mindestens einer homopolymeren bzw. copolymeren (Meth-)Acrylsäure, 25 bis 50 Gew.-% Natriumcarbonat (wasserfrei berechnet), 4 bis 20 Gew.-% Natriumsulfat (wasserfrei berechnet) und 1 bis 7 Gew.-% Wasser enthalten. Auch diese granularen Additive werden mittels Sprühtrocknung hergestellt.

Die Aufgabe der Erfindung bestand deshalb darin, ein einfaches und vergleichsweise kostengünstiges Verfahren zur Herstellung von granularen Additiven bereitzustellen, die hohe Mengen an Wirkstoffen enthalten und trotzdem auch in Abmischung mit anderen Inhaltsstoffen von Wasch- oder Reinigungsmitteln lagerstabil sind, d.h. nicht zum Verkleben und nicht zur Aufnahme von Feuchtigkeit neigen. Dabei sollten diese granularen Additive ohne einen nachträglichen Trocknungsschritt herstellbar sein. Diese Additive sollten einerseits hochtensidhaltig sein können, das Verfahren sollte aber nicht auf hochtensidhaltige Additive beschränkt sein. Vielmehr sollten auch solche Additive bereitgestellt werden können, die andere Inhaltsstoffe von Wasch- oder Reinigungsmitteln, vorteilhafterweise Buildersubstanzen, in hohen Mengen enthalten können. Ebenso sollten Wasch- oder Reinigungsmittel bereitgestellt werden, welche diese Additive enthalten und ebenfalls lagerstabil sind.

Gegenstand der Erfindung ist dementsprechend in einer ersten Ausführungsform ein Verfahren zur Herstellung eines granularen Additivs in einem Mischer/Granulator, wobei Wasser als Granulierflüssigkeit eingesetzt wird und daß dadurch gekennzeichnet ist, daß
a) feste, pulverförmige und/oder granulare Bestandteile vorgelegt,
b) gegebenenfalls flüssige Bestandteile, welche wasserfrei sind, hinzugegeben werden, wobei die Mischung der Bestandteile a) und b) einen Wassergehalt aufweist, der nicht oberhalb des theoretischen Wasserbindevermögens der Mischung liegt, und an-schließend
c) die Zugabe von Wasser oder wäßrigen Lösungen und/oder wäßrigen Dispersionen in den Mengen erfolgt, daß das Wasserbindevermögen der fertigen stabilen Granulate nicht überschritten wird, und
d) die resultierende Mischung bis zum Erreichen des Granulationspunkts bzw. zur Ausbildung eines rieselfähigen Granulats in dem Mischer/Granulator granuliert wird.

Der Fachmann unterscheidet in Feststoffen drei verschiedene Strukturebenen. In der ersten, der molekularen Ebene, kann Wasser in Form von Kristallwasser (Primärwasser) enthalten sein. Bei der Granulat- bzw. Agglomeratbildung kann es entweder zur Ausbildung von Wasserbrücken (2. Ebene) kommen oder die einzelnen festen Bestandteile der Granulate bzw. Agglomerate werden durch Feststoffbrücken (3. Ebene), also Feststoffen, die sich im Zwischenvolumen einzelner Partikel befinden und die wiederum Wasser gebunden haben können, miteinander verbunden. Auch sogenanntes migrierendes Wasser, das nicht fest an die äußere Oberfläche von Partikeln gebunden ist (ein Beispiel hierfür ist Zeolith), kann dazu beitragen, daß der tatsächliche Wassergehalt der fertigen stabilen Granulate höher ist als das theoretische Wasserbindevermögen, berechnet aus der Summe der einzelnen Rohstoffe.

Das theoretische Wasserbindevermögen eines Rohstoffs (1. Ebene) kann nach dem folgenden Verfahren bestimmt werden. Einige Stoffe bilden bei einer angenommenen Lagerungstemperatur zwischen 15 und 45 °C stabile Hydrate aus, von anderen ist es hingegen bekannt, daß von ihnen bei diesen Temperaturen stabile wasserfreie Modifikationen existieren. Alle Bestandteile, die bei den genannten Temperaturen stabile wasserfreie Modifikationen besitzen und auch in ihrer wasserfreien Form eingesetzt werden, gehen auch in die Berechnung wasserfrei ein; alle übrigen gehen mit dem Wassergehalt ihrer bei diesen Temperaturen stabilen wasserhaltigen Modifikation in die Rechnung ein. So liegt Zeolith als oder in einem Feststoff üblicherweise in hydratisierter Form vor. Stabiler hydratisierter Zeolith enthält vorzugsweise 20 bis 22 Gew.-% an gebundenem Wasser, bezogen auf hydratisierten Zeolith. Zeolith mit geringeren Wassergehalten ist bei den genannten Temperaturen übertrocknet und durchaus hygroskopisch. Beispielsweise hat es sich in der internationalen Patentanmeldung WO-A-94/22993 gezeigt, daß es Vorteile haben kann, wenn dem Zeolith in Granulaten genügend Wasser zur Ausbildung eines Hydrats mit einem Wassergehalt von 22 Gew.-%, bezogen auf hydratisierten Zeolith, zur Verfügung gestellt wird. Bestandteile wie Natriumsulfat, Natriumcarbonat und polymere Polycarboxylate werden hingegen als wasserfreie Substanzen gerechnet, obwohl bekannt ist, daß diese in Granulaten in der Regel in hydratisierter Form vorliegen. So ist die bekannteste Kristallmodifikation des Natriumsulfats sowie des Natriumcarbonats jeweils das Dekahydrat. Von Citronensäure bzw. Citrat sind auch eine wasserfreie und eine wasserhaltige stabile Modifikation (Dihydrat) bekannt. Silikate hingegen liegen stabil nur in hydratisierter Form vor. Der Wassergehalt kann jedoch in Abhängigkeit vom eingesetzen Modul stark variieren. Hier empfiehlt es sich - wie bei allen stabilen Rohstoffen, deren genauer Wassergehalt nicht bekannt ist -, den Wassergehalt der stabilen vorliegenden Modifikation beispielsweise durch Ausglühen zu bestimmen. Letzteres gilt auch für Tenside, insbesondere für anionische Tenside, wohingegen nichtionische Tenside üblicherweise wasserfrei gerechnet werden.

Die Summe der Kristallwasseranteile der stabilen Hydrate, die gegebenenfalls zusätzlich zu stabilen wasserfreien Rohstoffen in einem Granulat eingesetzt werden, ergibt das theoretische (berechnete) Wasserbindevermögen dieses Granulats. Das eigentliche Wasserbindevermögen, also der tatsächliche Wassergehalt des stabilen Granulats ist jedoch normalerweise höher als der Wert, der sich aus der Summe des Wasserbindevermögens der einzelnen eingesetzten Rohstoffe ergibt. Dies läßt sich einmal anhand der Wasser in gebundener Form enthaltenden Feststoffbrücken der 3. Ebene erklären, die ja in der Berechnung des theoretischen Wasserbindevermögens vernachlässigt werden. Das Wasserbindevermögen des stabilen Granulats kann durch routinemäßige Experimente ermittelt werden (siehe unten).

Analoges gilt für den Fall, daß zur Herstellung der stabilen Granulate nicht nur Feststoffe der ersten Ebene, sondern bereits in dieser Stufe Compounds eingesetzt werden. Das Wasser-bindevermögen der Compounds ist normalerweise wie oben angegeben höher als es der Summe der Wasserwerte der eingesetzten Rohstoffe entspricht. So muß zunächst das Wasserbindevermögen der stabilen Compounds ermittelt werden. Dieses geht dann als theoretisches Wasserbindevermögen des Compound-Rohstoffs in die Berechnung des theoretischen Wasserbindevermögens des fertigen Granulats ein. Das eigentliche Wasserbindevermögen der fertigen stabilen Granulate ist dann normalerweise wiederum höher als es sich aus der Summe der theoretischen Wasserbindevermögen der Rohstoffe einschließlich der Compound-Rohstoffe ergibt; es kann aber zumindest nicht darunter liegen. Weist ein Granulat jedoch einen Wassergehalt auf, der niedriger ist als das theoretische Wasserbindevermögen, so handelt es sich um ein sogenanntes übertrocknetes Granulat.

Die Ermittlung des Wasserbindevermögens des fertigen stabilen Granulats kann beispielsweise dadurch erfolgen, daß im Schritt c) zunächst überschüssiges Wasser zugegeben wird und die entstandenen Granulate soweit getrocknet werden, bis sie rieselfähig und lagerstabil sind. Der Wassergehalt dieser (lager)stabilen Granulate kann beispielsweise durch Titration nach Karl Fischer oder durch Ausglühen der Granulate ermittelt werden. Im Rahmen dieser Erfindung ist der so ermittelte Wassergehalt des fertigen stabilen Granulats das Wasserbindevermögen dieses Granulats. Bei der erfindungsgemäßen Ausführung des beanspruchten Verfahrens wird also im Verfahrensschritt c) der Mischung aus a) und b) eine derartige Menge an Wasser zugeführt, die der maximalen Differenz zwischen dem theoretischen Wasserbinde-vermögen der Mischung aus a) und b) und dem Wasserbindevermögen der fertigen stabilen Granulate entspricht. In einer Ausführungsform der Erfindung ist es dabei bevorzugt, sogenannte übertrocknete Granulate herzustellen (durch Zugabe einer Menge an Wasser in c), die geringer ist, als es der Differenz zwischen dem theoretischen Wasserbindevermögen der Mischung und dem tatsächlichen Wasserbindevermögen des fertigen stabilen Granulats entspricht), die nachfolgend in einem Verfahren eingesetzt werden können, das zu einer weiteren, höheren Agglomerationsordnung führt.

Erfahrungsgemäß beträgt die Differenz zwischen dem theoretischen Wasserbindever-mögen der berechneten Rezeptur und dem Wasserbindevermögen des fertigen stabilen Granulats in den meisten Fällen 0,5 bis 5 Gew.-%. Insbesondere wenn die Granulate hohe Mengen an Rohstoffen enthalten, die in die Berechnung des theoretischen Wasserbinde-vermögens wasserfrei eingehen und in dem Verfahren wasserfrei eingesetzt werden, aber in der Lage sind, relativ hohe Mengen an Wasser in stabiler Form zu binden (beispiels-weise Natriumsulfat oder Natriumcarbonat), oder wenn ein granularer Bestandteil in übertrockneter Form eingesetzt wird, kann die Differenz oberhalb von 4 Gew.-% und in manchen Fällen sogar oberhalb von 5 Gew.-% liegen. Insbesondere ist es aber bevorzugt, derartige Granulate herzustellen, in denen die Differenz zwischen dem theoretischen Wasserbindevermögen der berechneten Rezeptur und dem Wasserbindevermögen der fertigen stabilen Granulate zwischen 1 und 3 Gew.-% liegt.

Da im Verfahrensschritt c) Wasser als Granulierflüssigkeit eingesetzt werden soll, wird erfindungsgemäß darauf geachtet werden, daß die Mischung aus a) und b) keinen Wassergehalt aufweist, der oberhalb des theoretischen Wasserbindevermögens dieser Mischung liegt, da ansonsten die Gefahr besteht, daß im Verfahrensschritt c) das Wasser-bindevermögen der stabilen fertigen Granulate überschritten wird. Dieses würde eine nachgeschaltete Trocknung erfordern, um die Rieselfähigkeit und Lagerstabilität der Granulate wiederherzustellen. Andererseits ist auch eine zu starke Übertrocknung der Mischung aus a) und b) nicht empfehlenswert, da in diesem Fall hohe Mengen an Wasser im Verfahrensschritt c) eingesetzt werden müssen, damit keine übertrockneten Granulate hergestellt werden.

Dabei ist es durchaus möglich, einen oder mehrere Rohstoffe in der Mischung aus a) und b) einzusetzen, welche einen höheren Wassergehalt aufweisen als ihrem theoretischen Wasser-bindevermögen entspricht. Zum Ausgleich wird dann ein Rohstoff oder werden mehrere andere Rohstoffe in übertrockneter Form (beispielsweise amorphe Silikate mit Wassergehalten zwischen 0 und 15 Gew.-%) eingesetzt. Essentiell ist lediglich, daß insgesamt das theoretische, berechnete Wasserbindevermögen der Mischung nicht überschritten wird.

Dabei findet die Granulierung vorzugsweise in üblichen Mischern/Granulatoren statt, welche einen hohen Energieeintrag erlauben. Beispiele für derartige Mischer/Granulatoren sind Eirich-Mischer, Lödige-Pflugscharmischer und der Lödige Recycler CB 30, der Fukae FS 30 oder Mischer von der Firma Schugi.

Die Zugabereihenfolge der Komponenten a) und b) ist insbesondere in einem kontinuier-lichen Prozeß relativ beliebig. Üblicherweise werden beim Start des Verfahrens feste, pulverförmige und/oder granulare Bestandteile vorgelegt. Es ist jedoch auch denkbar, daß nur eine Teilmenge der insgesamt eingesetzten festen Bestandteile vorgelegt wird und die Zugabe des Restes an einer späteren Stelle des Verfahrens erfolgt. Insbesondere in kontinuierlichen Prozessen kann die Zugabe derart gestaltet sein, daß nach einer gewissen Vorlaufzeit die Bestandteile a) und b) nahezu gleichzeitig dosiert werden. Möglich ist aber auch die bereits angedeutete Vorlage von einer Teilmenge der insgesamt eingesetzten festen Bestandteile a), wobei anschließend entweder die flüssigen Bestandteile b) und der Rest der festen Bestandteile a) nahezu gleichzeitig dosiert werden oder beispielsweise zunächst die flüssigen Bestandteile b) zu der vorgelegten Teilmenge der festen Bestand-teile a) hinzugegeben werden und erst im Anschluß daran die Zugabe der restlichen Menge der festen Bestandteile a) erfolgt. Weitere Variationen der Zugabereihenfolge von a) und b) sind denkbar und möglich.

Die festen Bestandteile a) sind vorzugsweise ausschließlich übliche Bestandteile von Wasch- oder Reinigungsmitteln. Hierzu zählen sowohl pulverförmige und/oder granulare Rohstoffe als auch granulare Compounds, die mindestens zwei verschiedene Inhaltsstoffe aufweisen. Dabei können sowohl nur Rohstoffe als auch nur Compounds, aber auch Kom-binationen von Rohstoffen und Compounds eingesetzt werden. In einer bevorzugten Aus-führungsform werden die granularen Rohstoffe und/oder Compounds überwiegend nicht durch die kostenträchtige Sprühtrocknung, sondern durch alternative Verfahren, beispiels-weise durch Granulierung oder Walzenkompaktierung erhalten. In einer vorteilhaften Aus-führungsform der Erfindung werden nur derartige feste Bestandteile a) eingesetzt, welche entweder wasserfrei sind oder Wasser nur in den Mengen enthalten, daß das theoretische Wasserbindevermögen des Rohstoffs bzw. des Compounds nicht überschritten wird. Insbesondere ist es bevorzugt, daß mindestens ein fester Bestandteil a) in der Form eingesetzt wird, daß sein theoretisches Wasser-bindevermögen unterschritten wird.

Zu den Bestandteilen a) zählen in erster Linie Tenside, wie Aniontenside, nichtionische Tenside, aber auch Amphotenside und Kationtenside. Diese Inhaltsstoffe liegen entweder bereits von Natur aus in fester Form vor oder müssen vor ihrem Einsatz in eine feste Form überführt werden. Weitere Bestandteile sind insbesondere anorganische und organische Buildersubstanzen, Bleichmittel und Bleichaktivatoren, Enzyme, anorganische Salze, die entweder in wäßriger Flotte alkalisch oder neutral reagieren, Vergrauungsinhibitoren und sogenannte soil repellents sowie übliche Kleinbestandteile, welche gegebenenfalls auf andere Bestandteile aufgesprüht oder zusammen mit anderen Bestandteilen compoundiert wurden.

Insbesondere sind von den Tensiden Aniontenside bevorzugt. Dabei handelt es sich beispielsweise um die bekannten Aniontenside vom Typ der Sulfonate oder Sulfate, aber auch um Seifen und Derivate der Bernsteinsäure.

Als Tenside vom Sulfonat-Typ kommen vorzugsweise die bekannten C₉-C₁₃-Alkylbenzolsulfonate, α-Olefinsulfonate und Alkansulfonate in Betracht. Geeignet sind auch Ester von α-Sulfofettsäuren bzw. die Disalze der α-Sulfofettsäuren. Weitere geeignete Aniontenside sind sulfierte Fettsäureglycerinester, welche Mono-, Di- und Triester sowie deren Gemische darstellen, wie sie bei der Herstellung durch Veresterung durch ein Monoglycerin mit 1 bis 3 Mol Fettsäure oder bei der Umesterung von Triglyceriden mit 0,3 bis 2 Mol Glycerin erhalten werden.

Geeignet sind auch die Salze der Alkylsulfobemsteinsäure, die auch als Sulfosuccinate oder als Sulfobernsteinsäureester bezeichnet werden.

Bevorzugte Aniontenside vom Sulfat-Typ sind beispielsweise die Schwefelsäurehalbester aus primären C₆-C₂₂-Alkoholen natürlichen und synthetischen Ursprungs, wobei die C₁₂-C₁₈-Alk(en)ylsulfate, einschließlich der Alkylsulfate mit ungeraden Kettenlängen, besonders vorteilhafte Eigenschaften aufweisen. Auch die Schwefelsäuremonoester der mit 1 bis 6 Mol Ethylenoxid umgesetzen geradkettigen oder verzweigten C₇-C₂₁-Alkohole (Ethersulfate), wie 2-Methyl-verzweigte C₉-C₁₁-Alkohole mit im Durchschnitt 3,5 Mol Ethylenoxid (EO) oder C₁₂-C₁₈-Fettalkohole mit 1 bis 4 EO, sind geeignet. Auch 2,3-Alkyl-sulfate, welche beispielsweise gemäß den US-Patentschriften 3,234,258 oder 5,075,041 hergestellt werden und als Handelsprodukte der Shell Oil Company unter dem Namen DAN^{(R)} erhalten werden können, sind geeignete Aniontenside.

Als weitere anionische Tenside kommen insbesondere Seifen in Betracht. Bevorzugt werden gesättigte Fettsäureseifen, wie die Salze der Laurinsäure, Myristinsäure, Palmitinsäure, Stearinsäure, hydrierte Erucasäure und Behensäure sowie insbesondere aus natürlichen Fettsäuren, z.B. Kokos-, Palmkern- oder Talgfettsäuren, abgeleitete Seifengemische.

Die anionischen Tenside können in Form ihrer Natrium-, Kalium- oder Ammoniumsalze sowie als lösliche Salze organischer Basen, wie Mono-, Di- oder Triethanolamin, vorliegen. Vorzugsweise liegen die anionischen Tenside in Form ihrer Natrium- oder Kaliumsalze, insbesondere in Form der Natriumsalze vor.

Auch bei Raumtemperatur und insbesondere bis 45 °C feste nichtionische Tenside können in der Verfahrensstufe a) eingesetzt werden. Hierzu zählen beispielsweise ethoxylierte Fettalkohole wie Talgfettalkohol mit 5 EO, aber auch C₁₂-C₁₈-Alkohole mit 7 EO ebenso wie mit 9 EO oder noch höheren Ethoxylierungsgraden, beispielsweise C₁₂-C₁₄-Alkohol oder C₁₂-C₁₈-Alkohole oder C₁₃-C₁₅-Alkohole oder C₁₆-C₁₈-Alkohole mit 12 EO, 14 EO, 30 EO, 40 EO oder Mischungen aus diesen.

Eine weitere Klasse bevorzugt eingesetzter nichtionischer Tenside, die entweder als alleiniges nichtionisches Tensid oder in Kombination mit anderen nichtionischen Tensiden eingesetzt werden, sind alkoxylierte, vorzugsweise ethoxylierte oder ethoxylierte und propoxylierte Fettsäurealkylester, vorzugsweise mit 1 bis 4 Kohlenstoffatomen in der Alkylkette, insbesondere Fettsäuremethylester, wie sie beispielsweise in der japanischen Patentanmeldung JP 58/217598 beschrieben sind oder die vorzugsweise nach dem in der internationalen Patentanmeldung WO-A-90/13533 beschriebenen Verfahren hergestellt werden. Besonders bevorzugt sind C₁₂-C₁₈-Fettsäuremethylester mit durchschnittlich 3 bis 15 EO, insbesondere mit durchschnittlich 5 bis 12 EO.

Zu den anorganischen Buildersubstanzen zählen insbesondere Zeolithe und kristalline Schichtsilikate.

Der eingesetzte feinkristalline, synthetische und gebundenes Wasser enthaltende Zeolith ist vorzugsweise Zeolith A und/oder Zeolith P. Geeignet sind jedoch auch Zeolith X und Mischungen aus A, X und/oder P wie MAP. Der Zeolith kann als Bestandteil a) als sprühgetrocknetes Pulver oder als Bestandteil c) als ungetrocknete, von ihrer Herstellung noch feuchte, stabilisierte Suspension zum Einsatz kommen. Für den Fall, daß der Zeolith als Suspension eingesetzt wird, kann diese geringe Zusätze an nichtionischen Tensiden als Stabilisatoren enthalten, beispielsweise 1 bis 3 Gew.-%, bezogen auf Zeolith, an ethoxylierten C₁₂-C₁₈-Fettalkoholen mit 2 bis 5 Ethylenoxidgruppen, C₁₂-C₁₄-Fettalkoholen mit 4 bis 5 Ethylenoxidgruppen oder ethoxylierten Isotridecanolen. Geeignete Zeolithe weisen eine mittlere Teilchengröße von weniger als 10 µm (Volumenverteilung; Meßmethode: Coulter Counter) auf und enthalten vorzugsweise 18 bis 22 Gew.-%, insbesondere 20 bis 22 Gew.-% an gebundenem Wasser.

Geeignete Substitute bzw. Teilsubstitute für Phosphate und Zeolithe sind kristalline, schichtförmige Natriumsilikate der allgemeinen Formel NaMSiₓO₂ₓ₊₁·yH₂O, wobei M Natrium oder Wasserstoff bedeutet, x eine Zahl von 1,9 bis 4 und y eine Zahl von 0 bis 20 ist und bevorzugte Werte für x 2, 3 oder 4 sind. Derartige kristalline Schichtsilikate werden beispielsweise in der europäischen Patentanmeldung EP-A-0 164 514 beschrieben. Bevorzugte kristalline Schichtsilikate der angegebenen Formel sind solche, in denen M für Natrium steht und x die Werte 2 oder 3 annimmt. Insbesondere sind sowohl β- als auch δ-Natriumdisilikate Na₂Si₂O₅·yH₂O bevorzugt, in denen y vorteilhafterweise den Wert 0 annimmt.

Weitere geeignete Bestandteile a) sind wasserlösliche anorganische Salze wie Bicarbo-nate, Carbonate, amorphe Silikate oder Mischungen aus diesen; insbesondere werden Alkalicarbonat und amorphes Alkalisilikat, vor allem Natriumsilikat mit einem molaren Verhältnis Na₂O : SiO₂ von 1:1 bis 1:4,5, vorzugsweise von 1:2 bis 1:3,5, eingesetzt. Unter dem Begriff "amorph" wird im Rahmen der Erfindung auch "röntgenamorph" verstanden. Dies heißt, daß die Silikate bei Röntgenbeugungsexperimenten keine scharfen Röntgenreflexe liefern, wie sie für kristalline Substanzen typisch sind, sondern allenfalls ein oder mehrere Maxima der gestreuten Röntgenstrahlung, die eine Breite von mehreren Gradeinheiten des Beugungswinkels aufweisen. Es kann jedoch sehr wohl sogar zu besonders guten Buildereigenschaften führen, wenn die Silikatpartikel bei Elektronen-beugungsexperimenten verwaschene oder sogar scharfe Beugungsmaxima liefern. Dies ist so zu interpretieren, daß die Produkte mikrokristalline Bereiche der Größe 10 bis einige Hundert nm aufweisen, wobei Werte bis max. 50 nm und insbesondere bis max. 20 nm bevorzugt sind. Besonders bevorzugt werden also amorphe Silikate und/oder Compounds, enthaltend amorphe Silikate und Natriumcarbonat, mit ausgeprägtem Sekundärwasch-vermögen eingesetzt.

Brauchbare organische Gerüstsubstanzen sind beispielsweise die bevorzugt in Form ihrer Natriumsalze eingesetzten Polycarbonsäuren, wie Citronensäure, Adipinsäure, Bernsteinsäure, Glutarsäure, Weinsäure, Zuckersäuren, Aminocarbonsäuren, Nitrilotriessigsäure (NTA), sofern ein derartiger Einsatz aus ökologischen Gründen nicht zu beanstanden ist, sowie Mischungen aus diesen. Bevorzugte Salze sind die Salze der Polycarbonsäuren wie Citronensäure, Adipinsäure, Bernsteinsäure, Glutarsäure, Weinsäure, Zuckersäuren und Mischungen aus diesen.

Geeignete polymere Polycarboxylate sind beispielsweise die Natriumsalze der Polyacrylsäure oder der Polymethacrylsäure, beispielsweise solche mit einer relativen Molekülmasse von 800 bis 150000 (auf Säure bezogen). Geeignete copolymere Polycarboxylate sind insbesondere solche der Acrylsäure mit Methacrylsäure und der Acrylsäure oder Methacrylsäure mit Maleinsäure. Als besonders geeignet haben sich Copolymere der Acrylsäure mit Maleinsäure erwiesen, die 50 bis 90 Gew.-% Acrylsäure und 50 bis 10 Gew.-% Maleinsäure enthalten. Ihre relative Molekülmasse, bezogen auf freie Säuren, beträgt im allgemeinen 5000 bis 200000, vorzugsweise 10000 bis 120000 und insbesondere 50000 bis 100000.

Die (co-)polymeren Polycarboxylate können entweder als Bestandteil a) als Pulver oder als Bestandteil c) als wäßrige Lösung eingesetzt werden, wobei 20 bis 55 Gew.-%ige wäßrige Lösungen bevorzugt sind.

Insbesondere bevorzugt sind auch biologisch abbaubare Polymere aus mehr als zwei verschiedenen Monomereinheiten, beispielsweise solche, die gemäß der DE-A-43 00 772 als Monomere Salze der Acrylsäure und der Maleinsäure sowie Vinylalkohol bzw. Vinylalkohol-Derivate oder gemäß der DE-C-42 21 381 als Monomere Salze der Acrylsäure und der 2-Alkylallylsulfonsäure sowie Zucker-Derivate enthalten.

Weitere bevorzugte Copolymere sind solche, die in den deutschen Patentanmeldungen DE 43 03 320 und P 44 17 734.8 beschrieben werden und als Monomere vorzugsweise Acrolein und Acrylsäure/Acrylsäuresalze bzw. Acrolein und Vinylacetat aufweisen.

Weitere geeignete Buildersysteme sind Oxidationsprodukte von carboxylgruppenhaltigen Polyglucosanen und/oder deren wasserlöslichen Salzen, wie sie beispielsweise in der internationalen Patentanmeldung WO-A-93/08251 beschrieben werden oder deren Herstellung beispielsweise in der internationalen Patentanmeldung WO-A-93/16110 beschrieben wird.

Ebenso sind als weitere bevorzugte Buildersubstanzen auch die bekannten Polyasparaginsäuren bzw. deren Salze und Derivate zu nennen.

Weitere geeignete Buildersubstanzen sind Polyacetale, welche durch Umsetzung von Dialdehyden mit Polyolcarbonsäuren, welche 5 bis 7 C-Atome und mindestens 3 Hydroxyl-gruppen aufweisen, beispielsweise wie sie in der europäischen Patentanmeldung EP-A-0 280 223 beschrieben werden, erhalten werden können. Bevorzugte Polyacetale werden aus Dialdehyden wie Glyoxal, Glutaraldehyd, Terephthalaldehyd sowie deren Gemischen und aus Polyolcarbonsäuren wie Gluconsäure und/oder Glucoheptonsäure erhalten.

Zusätzlich können als Bestandteile a) auch solche Inhaltsstoffe eingesetzt werden, welche die Öl- und Fettauswaschbarkeit aus Textilien positiv beeinflussen. Dieser Effekt wird besonders deutlich, wenn ein Textil verschmutzt wird, das bereits vorher mehrfach mit einem erfindungsgemäßen Waschmittel, das diese öl- und fettlösende Komponente enthält, gewaschen wird. Zu den bevorzugten öl- und fettlösenden Komponenten zählen beispielsweise nichtionische Celluloseether wie Methylcellulose und Methylhydroxy-propylcellulose mit einem Anteil an Methoxyl-Gruppen von 15 bis 30 Gew.-% und an Hydroxypropoxyl-Gruppen von 1 bis 15 Gew.-%, jeweils bezogen auf den nichtionischen Celluloseether, sowie die aus dem Stand der Technik bekannten Polymere der Phthalsäure und/oder der Terephthalsäure bzw. von deren Derivaten, insbesondere Polymere aus Ethylenterephthalaten und/oder Polyethylenglykolterephthalaten oder anionisch und/oder nichtionisch modifizierten Derivaten von diesen.

Unter den als Bleichmittel dienenden, in Wasser H₂O₂ liefernden Verbindungen haben das Natriumperborattetrahydrat und das Natriumperboratmonohydrat besondere Bedeutung. Weitere brauchbare Bleichmittel sind beispielsweise Natriumpercarbonat, Peroxy-pyrophosphate, Citratperhydrate sowie H₂O₂ liefernde persaure Salze oder Persäuren, wie Perbenzoate, Peroxophthalate, Diperazelainsäure oder Diperdodecandisäure.

Als Bleichaktivatoren können mit H₂O₂ organische Persäuren bildende N-Acyl- bzw. O-Acyl-Verbindungen, vorzugsweise N,N'-tetraacylierte Diamine, p-(Alkanoyloxy)-benzolsulfonate, ferner Carbonsäureanhydride und Ester von Polyolen wie Glucosepentaacetat dienen. Weitere bekannte Bleichaktivatoren sind acetylierte Mischungen aus Sorbitol und Mannitol, wie sie beispielsweise in der europäischen Patentanmeldung EP-A-0 525 239 beschrieben werden.

Vergrauungsinhibitoren haben die Aufgabe, den von der Faser abgelösten Schmutz in der Flotte suspendiert zu halten und so das Wiederaufziehen des Schmutzes zu verhindern. Hierzu sind wasserlösliche Kolloide meist organischer Natur geeignet, beispielsweise die wasserlöslichen Salze polymerer Carbonsäuren, Leim, Gelatine, Salze von Ether-carbonsäuren oder Ethersulfonsäuren der Stärke oder der Cellulose oder Salze von sauren Schwefelsäureestern der Cellulose oder der Stärke. Auch wasserlösliche, saure Gruppen enthaltende Polyamide sind für diesen Zweck geeignet. Weiterhin lassen sich lösliche Stärkepräparate und andere als die obengenannten Stärkeprodukte verwenden, z.B. abgebaute Stärke, Aldehydstärken usw.. Auch Polyvinylpyrrolidon ist brauchbar. Bevorzugt werden jedoch Celluloseether, wie Carboxymethylcellulose (Na-Salz), Methylcellulose, Hydroxyalkylcellulose und Mischether, wie Methylhydroxyethylcellulose, Methylhydroxypropylcellulose, Methylcarboxymethylcellulose und deren Gemische, sowie Polyvinylpyrrolidon beispielsweise in Mengen von 0,1 bis 5 Gew.-%, bezogen auf die Mittel, eingesetzt.

Auch die flüssigen wasserfreien Bestandteile b) sind vorzugsweise bekannte Inhaltsstoffe von Wasch- oder Reinigungsmitteln, die bei der Verarbeitungstemperatur flüssig, bei Raumtemperatur jedoch gegebenenfalls zähflüssig, gelförmig oder wachsartig sein können. Hierzu zählen beispielsweise Aniontenside der obengenannten Art in ihrer Säureform, die erst durch in der Mischung vorliegende alkalische Bestandteile neutralisiert werden. Ihr Einsatz ist aber nur in Ausnahmefällen bevorzugt, da bei der Neutralisation Wasser entsteht. Möglich wäre aber der Einsatz von Aniontensidsäuren, die erst in der Verfahrensstufe c) neutralisiert werden.

Besonders bevorzugt sind als Bestandteil b) reine nichtionische Tenside. Hier wären vor allem ethoxylierte Fett- und Oxo-Alkohole zu nennen, wobei letztere in ihrer 2-Stellung eine Methylverzweigung aufweisen. Insbesondere bevorzugt ist dabei der Einsatz von C₁₂-C₁₈-Alkoholen, C₁₃-C₁₅-Alkohlen oder C₁₂-C₁₄-Alkoholen mit jeweils 2, 3 oder 5 EO.

Die Arbeitstemperaturen liegen dabei im allgemeinen zwischen 20 und 60°C, vorzugsweise zwischen 30 und 50°C. Der Gehalt der flüssigen Bestandteile b) kann in einem breiten Rahmen variieren und liegt beispielsweise zwischen 0 und 25 Gew.-%, vorzugsweise zwischen 2 und 20 Gew.-%, insbesondere zwischen 5 und 18 Gew.-%.

Nach der Zugabe von Wasser, wäßrigen Lösungen oder wäßrigen Dispersionen c) erfolgt die Granulierung in Mischern/Granulatoren nur solange, bis der Granulationspunkt gerade erreicht wird. Darunter versteht der Fachmann im allgemeinen keinen eigentlichen Zeitpunkt, sondern den gesamten Bereich, in dem der Energieeintrag nur langsam zunimmt, bis direkt vor dem Zeitpunkt, an dem ein abrupter Anstieg des Energieeintrags erfolgt. Die Mischung wird dabei bis zur Ausbildung eines rieselfähigen Granulats in dem Mischer/Granulator granuliert. Der Zeitpunkt des abrupten Energieeintrags wird auch durch eine plötzlich und deutlich sichtbar eintretende Vergröberung der relativ feinteiligen Mischung erkennbar. Eine derartige Vergöberung des Materials soll aber vermieden werden.

Da bei Ausbildung der Granulate durch das Anlösen einiger Pulverbestandteile und die Durchmischung dieser angelösten Bestandteile mit dem restlichen Pulver Energie freigesetzt wird, kann es in einigen Fällen bevorzugt sein, die Mischung zu kühlen, um einen unkontrollierten Anstieg der Temperatur, beispielsweise einen Anstieg auf Temperaturen oberhalb von 60 °C, zu vermeiden.

Auch aus dem Vorgenannten geht klar hervor, warum die Wassermenge als ein kritischer Faktor angesehen werden muß. Wenn zuviel Wasser zugegeben wird - nämlich Mengen, die oberhalb des Wasserbindevermögens der fertigen (lager)stabilen Granulate liegen -, kommt es gerade auch in Abhängigkeit vor der Verarbeitungstemperatur zu Verklebungen und Sekundäragglomerationen. Gegebenenfalls kann die Zugabe weiterer Mengen an Feststoffen erforderlich sein, um überschüssige Flüssigbestandteile (nicht Wasser!) zu binden.

Da die bis zum Granulationspunkt zuzufügende Wassermenge von dem jeweiligen Fall abhängt, können keine zwingenden Mengen angegeben werden, die auf jeden Fall zum Erfolg führen. In einer bevorzugten Ausführungsform beträgt die Wassermenge c) in Abhängigkeit von der zu granulierenden Mischung jedoch vorzugsweise etwa 0,5 bis 10 Gew.-%, bezogen auf die gesamte Mischung, und insbesondere 1 bis 5 Gew.-%. Dabei ist es irrelevant, ob das Wasser als alleiniger Rohstoff oder in Form einer wäßrigen Lösung oder in Form einer wäßrigen Dispersion in das Verfahren eingebracht wird.

Als wäßrige Lösungen werden solche von anorganischen und/oder organischen Buildersubstanzen bevorzugt. Hierbei kommen also insbesondere Lösungen von Alkalisilikaten, Alkalicarbonaten, aber auch von Polycarboxylaten, beispielsweise Citraten, und (co)-polymeren Polycarboxylaten in Betracht. Aber auch wäßrige Tensidpasten von anionischen und/oder nichtionischen Tensiden sind bevorzugt. Beispielsweise können hochkonzentrierte Pasten von Alkylbenzolsulfonaten und Alkylsulfaten eingesetzt werden. Insbesondere bevorzugt ist an dieser Stelle auch der Einsatz von nichtionischen Tensidpasten wie Pasten von Alkylglykosiden, Polyhydroxyfettsäureamiden oder den bereits obengenannten Fettsäuremethylesterethoxylaten.

Alkylglykoside sind Tenside der allgemeinen Formel RO(G)ₓ, in der R einen primären geradkettigen oder methylverzweigten, insbesondere in 2-Stellung methylverzweigten aliphatischen Rest mit 8 bis 22, vorzugsweise 12 bis 18 C-Atomen bedeutet und G das Symbol ist, das für eine Glykoseeinheit mit 5 oder 6 C-Atomen, vorzugsweise für Glucose, steht. Der Oligomerisierungsgrad x, der die Verteilung von Monoglykosiden und Oligoglykosiden angibt, ist eine beliebige Zahl zwischen 1 und 10; vorzugsweise liegt x bei 1,2 bis 1,4.

Polyhydroxyfettsäureamide gehorchen der Formel (I), 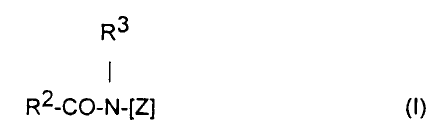 in der R²CO für einen aliphatischen Acylrest mit 6 bis 22 Kohlenstoffatomen, R³ für Wasserstoff, einen Alkyl- oder Hydroxyalkylrest mit 1 bis 4 Kohlenstoffatomen und [Z] für einen linearen oder verzweigten Polyhydroxyalkylrest mit 3 bis 10 Kohlenstoffatomen und 3 bis 10 Hydroxylgruppen steht. Vorzugsweise leiten sich die Polyhydroxyfettsäureamide von reduzierenden Zuckern mit 5 oder 6 Kohlenstoffatomen, insbesondere von der Glucose ab.

In einer bevorzugten Ausführungsform der Erfindung wird eine Mischung aus a) und b) eingesetzt, wobei die Summe der einzelnen Bestandteile der Mischung einen Wasser-gehalt aufweist, der unterhalb des theoretischen Wasserbindevermögens der zu bildenden Agglomerate/Granulate liegt. Dies kann beispielsweise durch den Einsatz übertrockneter Rohstoffe wie Zeolith oder amorphe Silikate erfolgen. Dabei hat es sich als besonders vorteilhaft herausgestellt, wenn der Wassergehalt der Summe der einzelnen in a) und b) eingesetzten Bestandteile nur bis zu 80 % des theoretischen Wasserbindevermögens beträgt oder bei dem maximal 80 % des Wasserbindevermögens der fertigen Granulate erreicht werden, so daß durch den Zusatz von Wasser der entsprechenden Menge thermodynamisch stabile Granulate entstehen. Dabei ist dem Verfahren der Vorzug zu geben, bei dem eine Mischung aus a) und b) eingesetzt wird, deren Bestandteile mit einem theoretischen Wasserbindevermögen von maximal 80 % des tatsächlichen Wasserbindevermögens der fertigen stabilen Granulate eingebracht werden.

Wie oben bereits ausgeführt, ist es auch möglich, übertrocknete Granulate herzustellen. Sollen diese jedoch nicht in einem weiteren Agglomerations-/Granulationsverfahren sondern als Endprodukt eingesetzt werden, dann ist es vielfach erforderlich, die fertigen Granulate zu umhüllen, da diese sonst hygroskopisch sind. Wenn jedoch ohnehin eine Umhüllung der Granulate vorgesehen ist, beispielsweise um die Schüttdichte der fertiggestellten Granulate noch weiter zu erhöhen, dann ist es in der Tat bevorzugt, daß das Wasserbindevermögen der Agglomerate/Granulate unterschritten wird. In einer bevorzugten Ausführungsform des erfindungsgemäßen Verfahrens wird Wasser deshalb nur in den Mengen zugegeben, daß das Wasserbinde-vermögen der fertigen Granulate nicht nur nicht überschritten, sondern unterschritten wird.

Da die erfindungsgemäß hergestellten Granulate kein Wasser in Mengen oberhalb ihres Wasserbindevermögens aufweisen, ist eine nachgeschaltete Trocknung der Additive nicht erforderlich. Allerdings ist es bevorzugt, die Additive vor der Lagerung einer "Kaltluft" von etwa 15 bis 40°C, vorzugsweise Raumtemperatur bzw. um 30 °C auszusetzen, um die Rieselfähigkeit der Granulate zu verbessern. Dies wird vorzugsweise in einem Fließbett, einer Wirbelschicht, einer Schüttelrinne, einem Wendelwuchtförderer oder auch einfach auf einem Transportband durchgeführt.

Bevorzugte Additive, welche nach dem erfindungsgemäßen Verfahren hergestellt werden können, sind beispielsweise tensidreiche Tensid-Compounds, aber auch hochkonzentrierte (Co)Builder-Compounds, die ebenso bevorzugt hergestellt werden.

In einer bevorzugten Ausführungsform der Erfindung werden deshalb tensidreiche Additive hergestellt, welche wenigstens 20 Gew.-%, vorzugsweise wenigstens 30 Gew.-% und wenigstens 35 Gew.-% Tenside enthalten, wobei diese Menge in den Verfahrensschritten a) und/oder b) eingebracht werden.

In einer weiteren bevorzugten Ausführungsform der Erfindung werden builderreiche Additive hergestellt, welche anorganische und/oder organische Builder in Mengen von 30 bis 75 Gew.-%, vorzugsweise in Mengen von mindestens 35 Gew.-%, auf jeden Fall aber Alkali(bi-)carbonate und/oder Alkali(bi-)sulfate und/oder Alkalisilikate, vorzugsweise aber Alkalicarbonate und/oder Alkalisulfate und insbesondere Alkalicarbonate in Mengen von 15 bis 40 Gew.-%, vorzugsweise 20 bis 35 Gew.-% und insbesondere bis 30 Gew.-%, und nichtionische Tenside und/oder nichtschwefelhaltige Aniontenside vorzugsweise in Mengen von 2 bis 25 Gew.-%, insbesondere in Mengen von 5 bis 20 Gew.-% enthalten, wobei insbesondere nichtionische und nichtschwefelhaltige Aniontenside im Gewichtsverhältnis 2:1 bis 1:2 eingesetzt werden.

In einer weiteren bevorzugten Ausführungsform der Erfindung werden Cobuilder-Compounds gemäß der in der internationalen Patentanmeldung WO-A-92/13937, der deutschen Patentanmeldung DE-A-42 13 036 oder der europäischen Patentanmeldung EP-A-0 432 437 offenbarten Zusammensetzungen hergestellt. Insbesondere werden solche Additive hergestellt, welche insgesamt mindestens 35 Gew.-%, vorzugsweise mehr als 50 Gew.-% und vorteilhafterweise bis 70 Gew.-% (copolymere) Polycarboxylate enthalten, mit der Maßgabe, daß der Wassergehalt der Additive nicht oberhalb ihres theoretischen Wasserbindevermögens liegt. Diese Additive sind insbesondere frei von Zeolith.

Mit dem erfindungsgemäßen Verfahren kann ein granulares Additiv hergestellt werden, welches (co-)polymere Polycarboxylate sowie anorganische, in wäßriger Flotte alkalisch und/oder neutral wirkende Salze enthält, wobei der Gehalt an (co-)polymeren Polycarboxylaten mehr als 40 Gew.-%, vorzugsweise mehr als 45 Gew.-% und insbesondere mehr als 50 Gew.-%, der Gehalt an Alkali(bi-)carbonaten, Alkalisilikaten und/oder Alkali(bi-)sulfaten 10 bis 40 Gew.-%, vorzugsweise an Alkalicarbonaten und/oder Alkalisulfaten 15 bis 35 Gew.-% und insbesondere 20 bis 30 Gew.-% beträgt, das Additiv aber frei von Zeolith ist und maximal 100 % des theoretischen Wasserbindevermögens, vorzugsweise bis 80 % des theoretischen Wasserbindevermögens (berechnet aus der Summe der einzelnen Bestandteile) aufweist.

Ein bevorzugtes Additiv besteht beispielsweise aus copolymeren Polycarboxylaten, Alkalicarbonat, Niotensid, Seife und Wasser in Mengen unterhalb des theoretischen Wasserbindevermögens. Während die Sprühtrocknung derartiger Additive nicht nur kostenintensiv ist, sondern auch wegen des Gehalts an Seife, welche üblicherweise den wäßrigen und sprühzutrocknenden Ansatz verdickt, Schwierigkeiten bereitet und die nichtionischen Tenside in einem nachgeschalteten Verfahrensschritt aufgebracht werden müssen, können diese Additive mit Hilfe des erfindungsgemäßen Verfahrens ohne technische Probleme und kostengünstig hergestellt werden.

Die nach dem erfindungsgemäßen Verfahren hergestellten granularen Additive finden Verwendung in Wasch- oder Reinigungsmitteln.

Dabei werden insbesondere solche Wasch- oder Reinigungsmittel hergestellt, die sowohl ein erfindungsgemäß hergestelltes tensidreiches Compound als auch ein builderhaltiges erfindungsgemäßes oder erfindungsgemäß hergestelltes Compound sowie ggf. weitere Additive enthalten.

Bevorzugt werden derartige Compounds und Wasch- oder Reinigungsmittel bereitgestellt, die überwiegend eine Kugelform aufweisen. Derartige kugelförmige Granulate können beispielsweise durch die in der internationalen Patentanmeldung WO-A-94/13779 beschriebene Rollgranulierung erhalten werden.

### Beispiele

### Beispiel 1: Tensidreiche Compounds

Die festen Komponenten 1 bis 7 der in Tabelle 1 angegebenen Zusammensetzungen wurden in einem Eirich-Mischer vorgelegt und 3 bis 4 Minuten miteinander vermischt. Anschließend wurden die flüssigen Komponenten 8 und 9 eingerührt. Die resultierende Mischung wurde 1 bis 2 Minuten intensiv nachgemischt. Danach wurde das Wasser zugegeben, die Mischung bis zum Granulationspunkt granuliert und in der Wirbelschicht mit Kaltluft (30°C) etwa 10 Minuten nachbehandelt.

Es wurden 14,5 Gew.-% des Additivs A1 und 51,33 Gew.-% von A3 mit 17,67 Gew.-% Perboratmonohydrat, 8,67 Gew.-% Bleichaktivator-Granulat, 1,63 Gew.-% Enzymgranulat und 1,02 Gew.-% eines soil repellents (Repel-O-tex^{(R)}, Handelsprodukt der Firma Rhône-Poulenc) zu einem Universalwaschmittel vermischt und abschließend mit 1,52 Gew.-% eines Gemisches aus Zeolith und Kieselsäure abgepudert. Die Schüttdichte des Mittels betrug 710 g/l. Das Mittel war auch unter extremen Bedingungen lagerstabil und zeichnete sich durch ausgezeichnete Ergebnisse bezüglich des Einspülverhaltens über eine Einspülkammer einer handelsüblichen Waschmaschine, des Löseverhaltens und des Rückstandsverhaltens auf Textilien auf.

Vergleichbar hervorragende Werte wies ein Mittel auf, das sich aus 39,8 Gew.-% A2, 13,0 Gew.-% A4, 12,0 Gew.-% eines Additivs A5, bestehend aus 25,69 Gew.-% Alkylbenzolsulfonat, 5,06 Gew.-% C₁₂-C₁₈-Fettalkohol mit 7 EO, 51,55 Gew.-% Zeolith, 2,43 Gew.-% Salzen aus Rohstoffen (alle Angaben bezogen auf wasserfreie Aktivsubstanzen) und 15,27 Gew.-% Wasser, sowie aus 18,69 Gew.-% Percarbonat, 8,67 Gew.-% Bleichaktivator-Granulat, 1,63 Gew.-% Enzymgranulat und 1,02 Gew.-% eines soil repellents zusammensetzte und mit 1,52 Gew.-% eines Gemisches aus Zeolith und Kieselsäure abgepudert war. Die Schüttdichte dieses Mittels betrug 780 g/l.

### Beispiel 2: Tensid-arme und Builder-reiche Additive

Wie in Beispiel 1 wurden die festen Komponenten 1 bis 6 vorgelegt und gemischt, die flüssigen Komponenten 7 und 8 hinzugegeben und intensiv nachgerührt (s. Tabelle 2).

Danach wurden das Wasser 9 und die wäßrige Lösung 10 zugegeben und die Mischung bis zum Granulationspunkt granuliert und in der Wirbelschicht mit Kaltluft (30°C) etwa 10 Minuten nachbehandelt.
Es wurden nun 17,1 Gew.-% des Additivs A6 und 29,20 Gew.-% von A7 sowie 19,53 Gew.-% eines Additivs A10, welches aus 91 Gew.-% C₁₂-C₁₈-Fettalkylsulfat, 6,3 Gew.-% Natriumsulfat und 2,7 Gew.-% Wasser bestand (Schüttdichte: 607 g/l), mit 17,67 Gew.-% Perboratmonohydrat, 8,67 Gew.-% Bleichaktivator-Granulat, 1,63 Gew.-% Enzymgranulat und 1,02 Gew.-% eines soil repellents (Repel-O-tex^{(R)}, Handelsprodukt der Firma Rhône-Poulenc) zu einem Universalwaschmittel vermischt und mit 1,52 Gew.-% eines Gemisches aus Zeolith und Kieselsäure abgepudert und mit 3,66 Gew.-% eines granularen Schauminhibitors nachbehandelt. Die Schüttdichte des Mittels betrug 660 g/l. Das Mittel war auch unter extremen Bedingungen lagerstabil und zeichnete sich durch sehr gute Ergebnisse bezüglich des Einspülverhaltens über eine Einspülkammer einer handelsüblichen Waschmaschine, des Löseverhaltens und des Rückstandsverhaltens auf Textilien auf.

Vergleichbar hervorragende Werte wies ein Mittel auf, das sich aus 31 Gew.-% A8, 12,53 Gew.-% A9, 20,78 Gew.-% des Additivs A10 sowie aus 18,69 Gew.-% Percarbonat, 8,67 Gew.-% Bleichaktivator-Granulat, 1,63 Gew.-% Enzymgranulat und 1,02 Gew.-% eines soil repellents zusammensetzte und mit ebenfalls 1,52 Gew.-% eines Gemisches aus Zeolith und Kieselsäure abgepudert und mit 3,66 Gew.-% eines granularen Schauminhibitors nachbehandelt war. Die Schüttdichte dieses Mittels betrug 723 g/l.

**Tabelle 1:**

| Berechnete Rezepturen der Additive A1 bis A4 und Wasserbindevermögen der stabilen Granulate | | | | | |
|---|---|---|---|---|---|
| Nr. | Komponente Art (wasserfrei berechnet) | Additiv (Zusammensetzung in Gew.-%) | | | |
| | | A1 | A2 | A3 | A4 |
| 1 | Alkylbenzolsulfonat | 33,77 | 32,59 | 25,83 | 27,08 |
| 2 | C₁₂-C₁₈-Fettsäureseife-Natriumsalz | 1,54 | 1,72 | 1,07 | 1,42 |
| 3 | amorphes Natriumdisilikat | 2,98 | ---- | 2,20 | ---- |
| 4 | Natriumcarbonat | 19,99 | ---- | 6,99 | ---- |
| 5 | Zeolith A | 17,98 | 36,24 | 37,62 | 41,25 |
| 6 | Copolymeres Salz der Acrylsäure | 7,44 | 7,5 | 4,93 | 7,56 |
| 7 | Natriumsulfat | 3,15 | 3,08 | 2,50 | 2,71 |
| 8 | C₁₂-C₁₈-Fettalkohol mit 7 EO | 3,49 | 5,45 | 5,23 | 5,30 |
| 9 | C₁₆-C₁₈-Fettalkohol mit 5 EO | 1,25 | 1,21 | 0,89 | 1,33 |
| 10 | theoretisches Wasbindevermögen (Summe aus Rohstoffen) | 8,41 | 12,21 | 12,74 | 13,35 |

Wie erwartet war das eigentliche Wasserbindevermögen der Additive (bestimmt nach Karl Fischer, modifiziert) höher als das theoretische Wasserbindevermögen. Die Differenz an Wasser wurde im Verfahrensschritt c) hinzugegeben. Der Gehalt der Additive an den Komponenten Nr. 1 bis 9 erniedrigte sich entsprechend:

| | | | | |
|---|---|---|---|---|
| Wasserbindevermögen (tatsächlicher Wassergehalt) | 9,78 | 15,36 | 13,31 | 15,93 |
| Schüttdichte (g/l) | 650 | 700 | 750 | 750 |

**Tabelle 2:**

| Berechnete Rezepturen der Additive A6 bis A9 und Wasserbindevermögen der stabilen Granulate | | | | | |
|---|---|---|---|---|---|
| Nr. | Komponente Art (wasserfrei berechnet) | Additiv (Zusammensetzung in Gew.-%) | | | |
| | | A6 | A7 | A8 | A9 |
| 1 | C₁₂-C₁₈-Fettsäureseife-Natriumsalz | 4,59 | ---- | ---- | 6,11 |
| 2 | amorphes Natriumdisilikat | 9,78 | ---- | ---- | ---- |
| 3 | Natriumcarbonat | 41,11 | ---- | ---- | ---- |
| 4 | Zeolith A | 9,38 | 71,40 | 67,18 | 50,25 |
| 5 | Copolymeres Salz der Acrylsäure (Pulver) | 22,76 | ---- | 4,12 | 21,75 |
| 6 | Natriumsulfat | 1,72 | ---- | 1,40 | 2,25 |
| 7 | C₁₂-C₁₈-Fettalkohol mit 7 EO | ---- | 10,76 | 10,50 | ---- |
| 8 | C₁₆-C₁₈-Fettalkohol mit 5 EO | 3,90 | ---- | ---- | 5,20 |
| 9 | theoretisches Wasbindevermögen (Summe aus Rohstoffen) | 6,77 | 17,84 | 16,80 | 14,46 |

Wie erwartet war das eigentliche Wasserbindevermögen der Additive (bestimmt nach Karl Fischer) höher als das theoretische Wasserbindevermögen. Die Differenz wird im Verfahrensschritt c) hinzugegeben. Der Gehalt der Additive an den Komponenten Nr. 1 bis 8 erniedrigte sich entsprechend:

| | | | | |
|---|---|---|---|---|
| Wasserbindevermögen (tatsächlicher Wassergehalt) | 11,33 | 18,09 | 19,33 | 14,46 |
| Schüttdichte (g/l) | 670 | 730 | 750 | 760 |

## Patentansprüche

1. Verfahren zur Herstellung eines granularen Additivs in einem Mischer/Granulator, wobei Wasser als Granulierhilsmittel eingesetzt wird, dadurch gekennzeichnet, daß
a) feste, pulverförmige und/oder granuläre Bestandteile vorgelegt,
b) gegebenenfalls flüssige Bestandteile, welche wasserfrei sind, hinzugegeben werden, wobei die Mischung der Bestandteile a) und b) einen Wassergehalt aufweist, der nicht oberhalb des theoretischen Wasserbindevermögens der Mischung liegt, und anschließend
c) die Zugabe von Wasser oder wäßrigen Lösungen und/oder wäßrigen Dispersionen in den Mengen erfolgt, daß das Wasserbindevermögen der fertigen stabilen Granulate nicht überschritten wird, und
d) die resultierende Mischung bis zum Erreichen des Granulationspunkts bzw. zur Ausbildung eines rieselfähigen Granulats in dem Mischer/Granulator granuliert wird.

2. Verfahren nach Anspruch 1, dadurch gekennzeichnet, daß Granulate hergestellt werden, in denen die Differenz zwischen der Summe des theoretischen Wasser-bindevermögens der berechneten Rezeptur und dem tatsächlichen Wasserbinde-vermögen der fertigen stabilen Granulate zwischen 0,5 und 5 Gew.-% und ins-besondere zwischen 1 und 3 Gew.-% liegt.

3. Verfahren nach Anspruch 1 oder 2, dadurch gekennzeichnet, daß als feste Bestandteile a) pulverförmige und/oder granulare Rohstoffe und/oder granulare Compounds, die mindestens zwei verschiedene Inhaltsstoffe aufweisen, eingesetzt werden, wobei vorzugsweise nur derartige feste Bestandteile a) eingesetzt werden, welche entweder wasserfrei sind oder Wasser nur in den Mengen enthalten, daß das theoretische Wasserbindever-mögen des Rohstoffs bzw. des Compounds nicht überschritten wird.

4. Verfahren nach einem der Ansprüche 1 bis 3, dadurch gekennzeichnet, daß mindestens ein fester Bestandteil a) eingesetzt wird, der einen derartigen tatsächlichen Wassergehalt aufweist, daß sein theoretisches Wasserbindevermögen unterschritten wird.

5. Verfahren nach einem der Ansprüche 1 bis 4, dadurch gekennzeichnet, daß eine Mischung aus a) und b) eingesetzt wird, deren Bestandteile mit einem theoretischen Wasserbindevermögen von maximal 80 % des tatsächlichen Wasserbindevermögens der fertigen stabilen Granulate eingebracht werden.

6. Verfahren nach einem der Ansprüche 1 bis 5, dadurch gekennzeichnet, daß die Additive vor der Lagerung einer Kaltluft von etwa 15 bis 40 °C, vorzugsweise Raumtemperatur bzw. um 30 °C ausgesetzt werden.

7. Verfahren nach einem der Ansprüche 1 bis 6, dadurch gekennzeichnet, daß tensidreiche Additive hergestellt werden, welche Tenside in Mengen von wenigstens 20 Gew.-%, vorzugsweise in Mengen von wenigstens 30 Gew.-% und insbesondere von wenigstens 35 Gew.-% enthalten, wobei diese Menge in den Verfahrensschritten a) und/oder b) eingebracht wurde.

8. Verfahren nach einem der Ansprüche 1 bis 7, dadurch gekennzeichnet, daß builderreiche Additive hergestellt werden, welche anorganische und/oder organische Builder in Mengen von 30 bis 75 Gew.-%, vorzugsweise in Mengen von mindestens 35 Gew.-%, auf jeden Fall aber Alkali(bi-)carbonate und/oder Alkali(bi-)sulfate und/oder Alkalisilikate, vorzugsweise aber Alkalicarbonate und/oder Alkalisulfate und insbesondere Alkalicarbonate in Mengen von 15 bis 40 Gew.-%, vorzugsweise 20 bis 35 Gew.-% und insbesondere bis 30 Gew.-%, und nichtionische Tenside und/oder nichtschwefelhaltige Aniontenside in Mengen von 2 bis 25 Gew.-%, insbesondere 5 bis 20 Gew.-% enthalten, wobei insbesondere nichtionische und nichtschwefelhaltige Aniontenside im Gewichtsverhältnis 2 : 1 bis 1 : 2 eingesetzt werden.

9. Verfahren nach einem der Ansprüche 1 bis 7, dadurch gekennzeichnet, daß ein granulares Additiv hergestellt wird, welches (co-)polymere Polycarboxylate sowie anorganische, in wäßriger Flotte alkalisch und/oder neutral wirkende Salze enthält, dadurch gekennzeichnet, daß der Gehalt an (co-)polymeren Polycarboxylaten mehr als 40 Gew.-%, vorzugsweise mehr als 45 Gew.-% und insbesondere mehr als 50 Gew.-%, der Gehalt an Alkali(bi-)carbonaten, Alkalisilikaten und/oder Alkali(bi-)sulfaten 10 bis 40 Gew.-%, vorzugsweise an Alkalicarbonaten und/oder Alkalisulfaten 15 bis 35 Gew.-% und insbesondere 20 bis 30 Gew.-% beträgt, das Additiv aber frei von Zeolith ist und maximal 100 % des theoretischen Wasserbindevermögens, vorzugsweise bis 80 % des theoretischen Wasserbindevermögens aufweist.

10. Verfahren zur Herstellung eines Additivs nach Anspruch 9, dadurch gekennzeichnet, daß das Additiv aus copolymeren Polycarboxylaten, Alkalicarbonat, Niotensid, Seife und Wasser in Mengen unterhalb des theoretischen Wasserbindevermögens besteht.

## Claims

1. A process for the production of a granular additive tive in a mixer/granular, characterized in that
a) solid powder-form and/or granular constituents are introduced first,
b) liquid water-free constituents are optionally added, the mixture of constituents a) and b) having a water content which is not above the theoretical water-binding capacity of the mixture, and
c) water or aqueous solutions and/or aqueous dispersions are then added in such quantities that the water-binding capacity of the final stable granules is not exceeded, and
d) the resulting mixture is granulated until the granulation point is reached or until free-flowing granules are formed in the mixer/granulator.

2. A process as claimed in claim 1, characterized in that granules in which the difference between the sum of the theoretical water-binding capacity of the calculated formulation and the actual water-binding capacity of the final stable granules is between 0.5 and 5% by weight and more particularly between 1 and 3% by weight are produced.

3. A process as claimed in claim 1 or 2, characterized in that powder-form and/or granular raw materials and/or granular compounds containing at least two different ingredients are used as the solid constituents a), only those solid constituents a) which are either water-free or contain water in only such quantities that the theoretical water-binding capacity of the raw material or compound is not exceeded prferably being used.

4. A process as claimed in any of claims 1 to 3, characterized in that at least one solid constituent a) which has such an actual water content that its water-binding capacity falls short of the theoretical value is used.

5. A process as claimed in any of claims 1 to 4, characterized in that a mixture of a) and b) of which the constituents are introduced with a theoretical water-binding capacity of at most 80% of the actual water-binding capacity of the final stable granules is used.

6. A process as claimed in any of claims 1 to 5, characterized in that the additives are exposed before storage to cold air with a temperature of about 15 to 40°C, preferably room temperature or a temperature of around 30°C.

7. A process as claimed in any of claims 1 to 6, characterized in that high-surfactant additives containing surfactants in quantities of at least 20% by weight, preferably in quantities of at least 30% by weight and more preferably in quantities of at least 35% by weight, this quantity being introduced in steps a) and/or b) of the process, are used.

8. A process as claimed in any of claims 1 to 7, characterized in that high-builder additives containing inorganic and/or organic builders in quantities of 30 to 75% by weight, preferably in quantities of at least 35% by weight, but at all events alkali metal (bi)carbonates and/or alkali metal (bi)sulfates and/or alkali metal silicates, but preferably alkali metal bicarbonates and/or alkali metal sulfates and in particular alkali metal carbonates in quantities of 15 to 40% by weight, preferably 20 to 35% by weight and more preferably up to 30% by weight, and nonionic surfactants and/or sulfur-free anionic surfactants in quantities of 2 to 25% by weight and preferably 5 to 20% by weight, nonionic and sulfur-free anionic surfactants in particular being used in a ratio by weight of 2:1 to 1:2, are produced.

9. A process as claimed in any of claims 1 to 7, characterized in that a granular additive containing (co)polymeric polycarboxylates and inorganic salts with an alkaline and/or neutral reaction in aqueous liquor is produced, characterized in that the content of (co)polymeric polycarboxylates is more than 40% by weight, preferably more than 45% by weight and in particular more than 50% by weight and the content of alkali metal (bi)carbonates, alkali metal silicates and/or alkali metal (bi)sulfates is 10 to 40% by weight, the additive preferably containing 15 to 35% by weight and in particular 20 to 30% by weight of alkali metal carbonates and/or alkali metal sulfates, but being free from zeolite and having at most 100% of the theoretical water-binding capacity and preferably up to 80% of the theoretical water-binding capacity.

10. A process for the production of the additive claimed in claim 9, characterized in that the additive consists of copolymeric polycarboxylates, alkali metal carbonate, nonionic surfactant, soap and water in quantities below the theoretical water-binding capacity.

## Revendications

1. Procédé de production d'un additif granulaire dans un mélangeur/granulateur, dans lequel on utilise l'eau comme adjuvant de granulation,
caractérisé en ce que
a) on dispose les constituants solides, pulvérulents et/ou granulaires,
b) le cas échéant, on ajoute les constituants liquides, qui sont anhydres, le mélange des constituants a) et b) présentant une teneur en eau qui ne se situe pas au-dessus du pouvoir théorique de liaison de l'eau, puis
c) on procède à l'addition d'eau ou de solutions aqueuses et/ou de dispersions aqueuses en des quantités ne dépassant pas le pouvoir de liaison de l'eau des granulés stables prêts à l'emploi et
d) on granule le mélange résultant jusqu'à obtention d'un point de granulation ou selon les cas la formation d'un granulé fluide dans le mélangeur/granulateur.

2. Procédé selon la revendication 1,
caractérisé en ce qu'
on produit des granulés dans lesquels la différence entre la somme du pouvoir théorique de liaison de l'eau de la composition calculée et du pouvoir effectif de liaison de l'eau des granulés stables prêts à l'emploi se situe entre 0,5 et 5 % en poids et en particulier entre 1 et 3 % en poids.

3. Procédé entre la revendication 1 ou 2,
caractérisé en ce qu'
on utilise comme composants solides a) des matières premières pulvérulentes et/ou granulaires et/ou des composés granulaires qui présentent au moins deux constituants, et on n'utilise de préférence que des composants solides a) qui ou bien sont anhydres ou bien ne contiennent de l'eau qu'à des quantités avec lesquelles on ne dépasse pas le pouvoir théorique de liaison de l'eau de la matière première ou selon les cas du composé.

4. Procédé selon l'une des revendications 1 à 3,
caractérisé en ce qu'
on utilise au moins un composant a) solide qui présente une teneur en eau effective telle que son pouvoir théorique de liaison de l'eau ne soit pas atteint.

5. Procédé selon l'une des revendications 1 à 4,
caractérisé en ce qu'
on utilise un mélange de a) et de b) dont les composants sont introduits avec un pouvoir théorique de liaison d'eau d'au maximum 80 % du pouvoir effectif de liaison de l'eau des granulés stables prêts à l'emploi.

6. Procédé selon l'une des revendications 1 à 5,
caractérisé en ce qu'
on expose les additifs avant conservation à un air froid d'environ 15 à 40 °C, de préférence à la température ambiante ou selon les cas aux environs de 30°C.

7. Procédé selon l'une des revendications 1 à 6,
caractérisé en ce qu'
on produit des additifs riches en agents tensioactifs qui contiennent des agents tensioactifs à des quantités d'au moins 20 % en poids, de préférence à des quantités d'au moins 30 % en poids et en particulier d'au moins 35 % en poids, cette quantité étant introduite dans les étapes a) et/ou b) du procédé.

8. Procédé selon l'une des revendications 1 à 7,
caractérisé en ce qu'
on produit des additifs riches en adjuvants, qui contiennent des adjuvants inorganiques et/ou organiques à des quantités de 30 à 75 % en poids, de préférence à des quantités d'au moins 35 % en poids, mais en tous cas des (bi)carbonates de métaux alcalins et/ou des (bi)sulfates de métaux alcalins et/ou des silicates de métaux alcalins, mais de préférence des carbonates de métaux alcalins et/ou des sulfates de métaux alcalins et en particulier des carbonates de métaux alcalins à des quantités de 15 à 40 % en poids, de préférence de 20 à 35 % en poids en particulier jusqu'à 30 % en poids, et des agents tensioactifs non ioniques et/ou des agents tensioactifs anioniques ne contenant pas de soufre à des quantités de 2 à 25 % en poids, en particulier de 5 à 20 % en poids, où l'on utilise en particulier des agents tensioactifs non ioniques et des agents tensioactifs anioniques ne contenant pas de soufre dans un rapport pondéral de 2:1 à 1:2.

9. Procédé selon l'une des revendications 1 à 7,
caractérisé en ce qu'
- on produit un additif granulaire qui contient des polycarboxylates (co)polymères ainsi que des sels inorganiques à action alcaline et/ou neutre dans le bain aqueux, et
- la teneur en polycarboxylates (co)polymères atteint plus de 40 % en poids, de préférence plus de 45 % en poids et en particulier plus de 50 % en poids, la teneur en (bi)carbonates de métaux alcalins, en silicates de métaux alcalins et/ou en (bi)sulfates de métaux alcalins atteint 10 à 40 % en poids, de préférence en carbonates de métaux alcalins et/ou en sulfates de métaux alcalins atteint 15 à 35 % en poids et en particulier 20 à 30 % en poids, l'additif est dépourvu de zéolithe et présente au maximum 100 % du pouvoir théorique de liaison de l'eau, de préférence jusqu'à 80 % du pouvoir théorique de liaison de l'eau.

10. Procédé de production d'un additif selon la revendication 9,
caractérisé en ce que
l'additif se compose de polycarboxylates copolymères, de carbonate de métal alcalin, d'agent tensioactif non ionique, de savon et d'eau à des quantités inférieures au pouvoir théorique de liaison de l'eau.
